# EUROPÄISCHE PATENTSCHRIFT

(11) **EP 3 363 719 B1**
(45) Veröffentlichungstag und Bekanntmachung des Hinweises auf die Patenterteilung: **11.12.2019**
(21) Anmeldenummer: 17168670.2
(22) Anmeldetag: 28.04.2017
(51) Int. Cl.: B62D 65/02

(54) **VERFAHREN ZUR HERSTELLUNG EINES KRAFTFAHRZEUGES**
METHOD FOR PRODUCING A MOTOR VEHICLE
PROCÉDÉ DE FABRICATION D'UN VÉHICULE AUTOMOBILE

(30) Priorität: 15.02.2017 EP 17156247
(43) Veröffentlichungstag der Anmeldung: 22.08.2018
(73) Patentinhaber: MAGNA STEYR Fahrzeugtechnik AG & Co KG, 8041 Graz (AT)
(72) Erfinder: ERLACHER, Manuel, 9545 Radenthein (AT); HÖRMANN, Reinhard, 8151 Hitzendorf (AT); PLANKA, Franz, 9433 St. Andrä (AT); ZACHNEGGER, Harald, 8041 Graz (AT)
(74) Vertreter: Zangger, Bernd

(56) Entgegenhaltungen:
- EP-A2- 2 463 181
- DE-A1-102010 055 957
- JP-A- H0 524 563
- US-A- 4 978 164
- US-A1- 2012 175 897

## Beschreibung

### Gebiet der Erfindung

Die vorliegende Erfindung betrifft ein Verfahren zur Herstellung eines Kraftfahrzeuges und ein Verfahren zur Herstellung einer Gruppe von Kraftfahrzeugen.

### Stand der Technik

Es ist bekannt dass Kraftfahrzeuge in verschiedenen Bauweisen hergestellt werden können, beispielsweise mit einer selbsttragenden Karosserie oder einer nicht selbsttragenden Karosserie, die auf einer tragenden Plattform aufgebaut sein kann, die auch als Fahrgestell, Untergestell oder Chassis bezeichnet werden kann.

Ein Kraftfahrzeug kann als sogenannten "Rohbau" eine derartige Plattform aus Metall umfassen und eine Karosserie aus Metall, die auf die Plattform aufgesetzt ist.

Bekannt sind auch verschiedene Antriebe für Kraftfahrzeuge wie Benzinantrieb, Elektroantrieb Hybridantrieb bzw. der Betrieb mit alternativen Kraftstoffen wie Erdgas, Wasserstoff und Alkohol. Diese Antriebe erfordern unterschiedliche Bauräume in der Fahrzeugarchitektur, speziell im Bodenbereich. In diesem Bereich befinden sich üblicherweise die stark unterschiedlichen Energiespeicher der Antriebe. Bei konventionellen Verfahren zur Herstellung von Kraftfahrzeugen entstehen daher viele verschiedene Varianten von Karosserien für Kombinationen verschiedener Antriebe, verschiedener Farben und verschiedener Fahrzeugtypen - wie z.B. Kombi, Limousine usw. - die zum Beispiel in einer Lagerzone nach der Lackierung (sogenannter "Lackpuffer") vorgehalten werden müssen, damit sie rasch zur Herstellung eines gewünschten Gesamtfahrzeuges abrufbar sind.

Die EP 2 463 181 A2 offenbart ein Verfahren zur Herstellung eines Kraftfahrzeugs umfassend die Schritte: Lackieren, insbesondere kathodisches Tauchlackieren, eines Fahrzeuggrundrahmens; Erzeugen eines Fahrgestells durch Anbringen eines Antriebsstrangs, eines Fahrwerks und einer Fahrzeugelektrikeinrichtung an dem lackierten Fahrzeuggrundrahmen; Anbringen von Ausstattungskomponenten, insbesondere für den Fahrzeuginnenraum, an dem Fahrgestell, um ein ausgestattetes Fahrgestell zu bilden; Lackieren, insbesondere Decklackieren, von bereitgestellten Aufbaurohbaumodulen; Erzeugen eines jeweiligen Aufbaumodulzusammenbaus aus jedem Aufbaurohbaumodul durch Anbringen einer zum jeweiligen Aufbaurohbaumodul gehörenden Modulelektrikeinrichtung und/oder zumindest einer Modulausstattungskomponente; und Anbringen, insbesondere Ankleben und/oder Anschrauben, der Aufbaumodulzusammenbauten an dem ausgestatteten Fahrgestell.

Aus der JP H05 24563 A ist ein Montageverfahren für ein Automobil bekannt, das in der Lage ist, eine obere Karosserieschale und eine untere Karosserieschale einfach zu verbinden. In dem Montageverfahren zum Kombinieren einer oberen Karosserieschale, mit einer unteren Karosserieschale, bestehend aus einem Unterbodenteil und einem vorderen Karosserieteil, die getrennt von der unteren Karosserieschale oder integral mit ihr hergestellt sind, nachdem sie jeweils separat montiert wurden, wird ein Aufnahmeteil oder eine Eingriffsnut zur Aufnahme des Randteils eines vorderen Bodens auf einem Seitenschweller der oberen Karosserieschiene gebildet, und die Ausrüstung wird durch jeweiliges Zuführen beider Karosserieschalen zu zugeordneten Ausrüstungslinien durchgeführt. Danach wird der von der Vorderkarosserie getrennte oder in sie integrierte Unterbodenteil relativ in Rückwärtsrichtung der Karosserielängsrichtung gegen die Oberkarosserieschale bewegt, wobei sowohl die rechte als auch die linke Seite des Vorderen Bodens mit Aufnahmeteilen in Eingriff stehen und über diese Aufnahmeteile mit der Oberkarosse verbunden sind.

Die US 4 978 164 A offenbart eine Fahrzeugkarosseriestruktur, umfassend: eine Motorraumanordnung mit einer Motorhaube und einer Armaturenbrettunterseite; eine Bodenanordnung mit einer vorderen Bodenplatte und einer hinteren Bodenplatte; mindestens eine Karosserieseitenanordnung mit einer vorderen Säule, einer hinteren Säule, einer Dachseitenschiene und einer Seitenschweller; eine Dachanordnung mit einer Dachplatte; wobei die Motorraumanordnung, die Bodenanordnung, die Karosserieseitenanordnung und die Dachanordnung unabhängige Fahrzeugkarosserieabschnitte bilden, die unabhängig vorbereitet und lackiert sind; wobei die Motorraumanordnung, die Bodenanordnung, die Karosserieseitenanordnung und die Dachanordnung Verbindungsabschnitte aufweisen, die sich gegenseitig überlappen; Mittel zum Verbinden der Verbindungsabschnitte mit Schrauben, Muttern und einem ersten Dichtungsmittelkleber; wobei der erste Dichtungsmittelkleber vor dem Verbinden der Verbindungsabschnitte auf einen der Verbindungsabschnitte aufgebracht wird; und Mittel zum Halten des ersten Dichtungsmittelklebers auf dem einen Verbindungsabschnitt vor dem Verbinden der Verbindungsabschnitte, wobei das Haltemittel einen zweiten Dichtungsmittelkleber umfasst, der den ersten Dichtungsmittelkleber umgibt und der eine höhere Viskosität als der erste Dichtungsmittelkleber aufweist und auf den einen Verbindungsabschnitt aufgebracht wird, um den ersten Dichtungsmittelkleber zu halten.

Die Erfindung soll die Herstellung eines Kraftfahrzeuges und einer Gruppe solcher Kraftfahrzeuge mit unterschiedlichen Antrieben vereinfachen.

### Zusammenfassung der Erfindung

Es ist eine Aufgabe der Erfindung, ein Verfahren zur Herstellung eines Kraftfahrzeuges und einer Gruppe von Fahrzeugen anzugeben, das eine einfachere und kostengünstigere Produktion von Fahrzeugen in unterschiedlichen Varianten, insbesondere Antriebsvarianten, ermöglicht.

Die Lösung der Aufgabe erfolgt durch ein Verfahren zur Herstellung eines Kraftfahrzeuges, wobei das Kraftfahrzeug als Rohbau eine Plattform aus Metall umfasst und eine Karosserie aus Metall, die auf die Plattform aufgesetzt ist, wobei ein Hauptbodenmodul, umfassend einen Hauptboden des Rohbaus und zumindest eine antriebsspezifische Komponente, getrennt vom übrigen Rohbau, also getrennt von der Plattform und getrennt von der Karosserie, hergestellt wird und danach an der bereits tauchlackierten Plattform und/oder an der bereits tauchlackierten Karosserie befestigt wird.

Erfindungsgemäß wird ein Hauptbodenmodul, das für einen bestimmten Antrieb des Kraftfahrzeuges ausgebildet ist, getrennt vom übrigen Rohbau, also getrennt von der Plattform und getrennt von der Karosserie, hergestellt und soweit erforderlich separat tauchlackiert. Derartige fertige Hauptbodenmodule, umfassend deren Hauptböden, können dann platzsparend gelagert bzw. vorgehalten werden, zur weiteren Verwendung mit parallel dazu vorbereiteten, bereits tauchlackierten Plattformen und/oder bereits tauchlackierten Karosserien.

Die Erfindung ermöglicht dadurch eine späte Karosserievariantenbildung, die erst in der Montage stattfindet. Durch die Vereinheitlichung des Rohbaus bzw. der Unterbauten, also der Plattformen und/oder der Karosserien, wird der "Lackpuffer" im Produktionsprozeß entlastet, also der Speicher aller Karosserienvarianten und Lackvarianten nach der Lackierung. Die je nach Antrieb spezifischen Hauptbodenmodule können als separate Module beispielsweise in einer Vormontagelinie gefertigt werden, gegebenenfalls zwischengelagert werden und an die Hauptmontagelinie angeliefert werden.

Die Bezeichnung "Rohbau" umfasst erfindungsgemäß die Bauteile Plattform, Hauptboden und Karosserie.

Vorzugsweise wird das Hauptbodenmodul in einer Montagelinie an der bereits tauchlackierten Plattform und/oder an der bereits tauchlackierten Karosserie befestigt. Diese Montage des Hauptbodenmoduls kann insbesondere an der selben Montagelinie und/oder in zeitlicher Nähe zur Montage des Antriebs am Rohbau erfolgen.

Bevorzugt werden an der Plattform und/oder an der Karosserie, nach dem Tauchlackieren und vor der Befestigung des Hauptbodenmoduls am übrigen Rohbau, Anbauteile montiert. Die Montage kann vorteilhaft so erfolgen, dass ein Monteur oder ein Montagewerkzeug die Zugänglichkeit zum Fahrzeuginnenraum durch den freien Boden des Rohbaus - da der Hauptboden zusammen mit dem Hauptbodenmodul ja erst nachträglich eingebaut wird - nutzt. Ein Monteur kann insbesondere auf einem Montageband stehend im Innenraum des Fahrzeuges arbeiten.

Die zumindest eine antriebsspezifische Komponente kann ein Flachspeicher sein, insbesondere eine Antriebsbatterie, und/oder eine Antriebswelle für einen Verbrennungsmotorantrieb, Elektroantrieb, Hybridantrieb oder Alternativantrieb. Das Hauptbodenmodul kann zum Zeitpunkt der Befestigung am übrigen Rohbau also mehrere Anbauteile aufweisen, also bereits ausgestattet sein, insbesondere auch mehrere antriebsspezifische Komponenten umfassen.

Die Abdeckung des Flachspeichers kann bevorzugt zugleich den Hauptboden des Rohbaus bilden, so dass zumindest abschnittsweise kein Freiraum zwischen Abdeckung und Hauptboden besteht, wodurch eine besonders kompakte Bauweise ermöglicht wird.

Vorzugsweise umfasst das Hauptbodenmodul, zum Zeitpunkt der Befestigung des Hauptbodenmoduls am übrigen Rohbau, an der Oberseite des Hauptbodens einen Teppich und/oder zumindest einen, vorzugsweise zwei oder vier, montierte Autositze und / oder eine Sitzbank.

Bevorzugt wird die Plattform und/oder die Karosserie und/oder das Hauptbodenmodul nach dem Tauchlackieren und vor der Befestigung des Hauptbodenmoduls am übrigen Rohbau gelagert, zumindest zwischengelagert. Die einzelnen Komponenten können somit fertig lackiert zur weiteren Verwendung bereitgehalten werden.

Das Hauptbodenmodul wird bevorzugt an der Plattform in Montagerichtung von unten oder von oben befestigt, insbesondere geklebt und/oder verschraubt.

Nach der Befestigung des Hauptbodenmoduls an der Plattform, können Karosseriemodule zur Bildung der Karosserie an der Plattform befestigt werden, zum Beispiel ein Seitenwandmodul, ein Dachmodul und/oder ein Heckabschlussmodul.

Die Karosseriemodule können zum Zeitpunkt der Befestigung an der Plattform bereits ausgestattet sein, zum Beispiel mit Innenverkleidungen, elektrischen Verkabelungen, Teppichen und/oder Griffen.

Es kann auch ein Hauptbodenmodul an einer kompletten Karosserie, mit bereits befestigter Plattform, in Montagerichtung von unten befestigt, insbesondere geklebt und/oder verschraubt, werden. Die Plattform kann in diesem Fall auch von Anfang an als Teil der Karosserie erstellt sein und somit im Herstellungsprozess nie als getrenntes Bauteil vorliegen.

Wird ein Hauptboden an einer kompletten Karosserie, also inklusive Plattform, Seitenwände, Dach etc. befestigt, bleibt als Montagerichtung nur mehr "von unten" ökonomisch sinnvoll. Wird der Hauptboden bereits schon an der bloßen Plattform befestigt, ist auf Grund der Zugänglichkeit zu diesem Zeitpunkt "von oben oder von unten" möglich.

In einem Verfahren zur Herstellung einer Gruppe von Kraftfahrzeugen, umfassend zumindest ein erstes Kraftfahrzeug und ein zweites Kraftfahrzeug, kann das erste und das zweite Kraftfahrzeug wie oben beschrieben hergestellt werden, wobei gleiche Hauptbodenmodule an unterschiedlichen Plattformen und/oder an unterschiedlichen Karosserien des ersten und zweiten Kraftfahrzeuges befestigt werden. Es ist daher durch das erfindungsgemäße Herstellungsverfahren möglich, für unterschiedliche Karosserien und/oder Plattformen, beispielsweise zur Bildung von Fahrzeugen unterschiedlichen Typs oder unterschiedlicher Farbe, gleichartige Hauptbodenmodule zu verwenden. Daher müssen auch weniger verschiedenartige Hauptbodenmodule vorgehalten werden.

Für das erste und das zweite Kraftfahrzeug können auch unterschiedliche Hauptbodenmodule an ansonsten gleichen Plattformen und/oder an gleichen Karosserien des ersten und zweiten Kraftfahrzeuges befestigt werden, um geeignete Böden und antriebsspezifische Komponenten für verschiedene Antriebssysteme darstellen zu können, dabei jedoch immer auf dieselben Karosserien und/oder Plattformen zugreifen zu können, wodurch wieder die Lagerhaltung vereinfacht wird.

### Kurzbeschreibung der Zeichnungen

Die Erfindung wird im Folgenden beispielhaft unter Bezugnahme auf die Zeichnungen beschrieben.
- Fig. 1: ist eine schematische Darstellung verschiedener Ausführungsformen eines erfindungsgemäßen Verfahrens.
- Fig. 2: ist eine Darstellung verschiedener Ausführungsformen der Montage von Hauptboden, antriebsspezifischer Komponente und Plattform bei herkömmlicher Bauweise (links) und erfindungsgemäßer Bauweise (rechts).
- Fig. 3: ist eine Darstellung verschiedener Ausführungsformen von Hauptboden, antriebsspezifischer Komponente und Plattform bei herkömmlicher Bauweise (links) und erfindungsgemäßer Bauweise (rechts).
- Fig. 4: ist eine schematische Darstellung einer Montage von Anbauteilen an einer Karosserie in einem erfindungsgemäßen Verfahren.
- Fig. 5: zeigt die Montage eines Hauptbodenmoduls mit Flachspeicher an einer Plattform in einer ersten Ausführungsform.
- Fig. 6: zeigt die Montage des Hauptbodenmoduls in der ersten Ausführungsform gemäß Fig. 5, jedoch in einem Bereich mit Sitzquerträger.
- Fig. 7: zeigt die Montage eines Hauptbodenmoduls mit Flachspeicher an einer Plattform in einer zweiten Ausführungsform.
- Fig. 8: zeigt die Montage des Hauptbodenmoduls in der zweiten Ausführungsform gemäß Fig. 7, jedoch in einem Bereich mit Sitzquerträger.
- Fig. 9: zeigt die Montage eines Hauptbodenmoduls mit Flachspeicher an einer Plattform in einer dritten Ausführungsform.
- Fig. 10: zeigt die Montage des Hauptbodenmoduls in der dritten Ausführungsform gemäß Fig. 9, jedoch in einem Bereich mit Sitzquerträger.

### Detaillierte Beschreibung der Erfindung

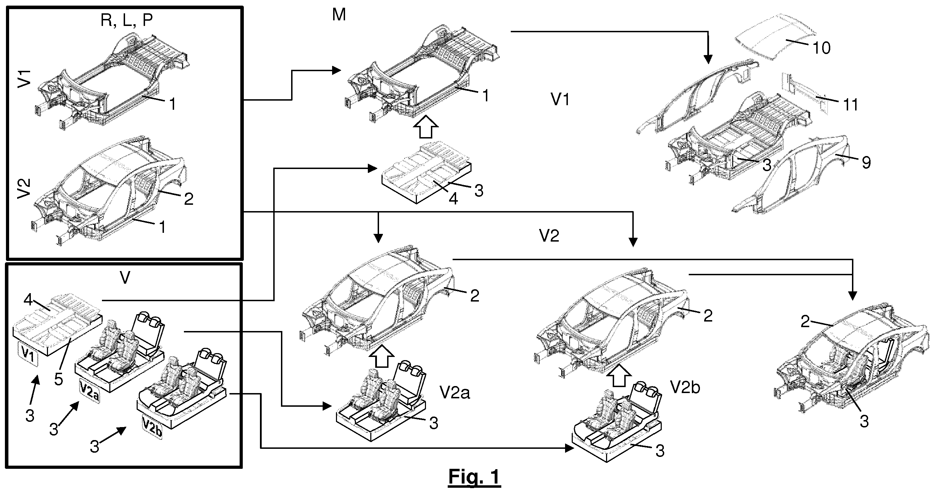

In Fig. 1 ist ein erfindungsgemäßes Verfahren zur Herstellung eines Kraftfahrzeuges, insbesondere der Herstellung einer Vielzahl von Kraftfahrzeugen in einer Produktionsanlage, in zwei Haupt-Ausführungsformen, Variante 1, V1, oben dargestellt, und Variante 2, V2, unten dargestellt. Mit diesen Herstellungsverfahren ist es möglich einheitliche Plattformen und/oder Karosserien in der Montage mit einem antriebsspezifischen Hauptbodenmodul zu vervollständigen.

In der Variante V1 werden Standard-Plattformen 1 in der RohbauFertigung R hergestellt, parallel dazu werden antriebsspezifische Hauptbodenmodule 3 und modellspezifische Karosseriemodule 9, 10, 11, einer Karosserie 2, zum Beispiel Seitenwände 9, Dach 10 und Heckabschluß 11 hergestellt.

Anschließend kommen diese Baugruppen in eine Lackierung L und werden tauchlackiert und bevorzugt die modellspezifischen Karosserieaufbau-Baugruppen, also Karosseriemodule 9, 10, 11, zusätzlich in einer gewünschten Wagenfarbe decklackiert.

In einem "Lackpuffer" P, beispielsweise einem Karosserienhaus zur Lagerung von Karosserien 2 und Karosseriemodulen, können die Plattformen 1 und Karosserien 2 bzw. deren Module 9, 10, 11, abrufbereit gespeichert werden.

Die Baugruppen können platzsparend gestapelt werden. Besonders von den Standard-Plattformen 1 müssen nur wenige gespeichert werden. Auch die modellspezifischen Karosserieaufbau-Baugruppen 9, 10, 11 benötigen wenig Raum, da sie bevorzugt noch nicht zu großvolumigen Karosserien verschweißt sind. So lassen sich viele Farbvarianten auf einfache Weise umsetzen. Nach Abruf der modell- und antriebsspezifischen Baugruppen wird zuerst die antriebsspezifische Bodengruppe, also das Hauptbodenmodul 3, an die Standard-Plattform 1 von oben oder bevorzugt von unten gefügt. Danach wird die nun antriebsspezifische Plattform 1 inkl. Hauptbodenmodul 3 und deren Hauptboden 4 mit Elektrik, Fahrwerk, Antrieb und sonstiger Ausstattung ausgestattet. Parallel dazu werden die modellspezifischen Karosserieaufbau-Baugruppen, Karosseriemodule 9, 10, 11, ausgestattet, wenn dies nicht bereits zuvor geschehen ist.

In einer Montagestation M, insbesondere "Framingstation", werden diese Baugruppen 1, 2, 3, 9, 10, 11 zu einem Gesamtfahrzeug gefügt. Damit findet eine sehr späte Variantenbildung des Fahrzeugmodells statt. Vorteilhafterweise kann somit eine kurze Hauptlinie für die Montage und die Verlagerung der Fertigungsinhalte in Vormontagelinien V mit optimaler Zugängigkeit, erzielt werden und somit Vorteile in der Fertigungszeit.

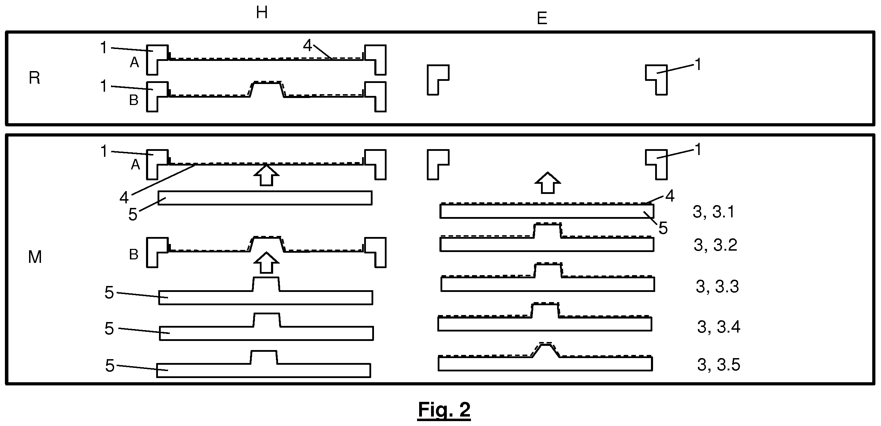

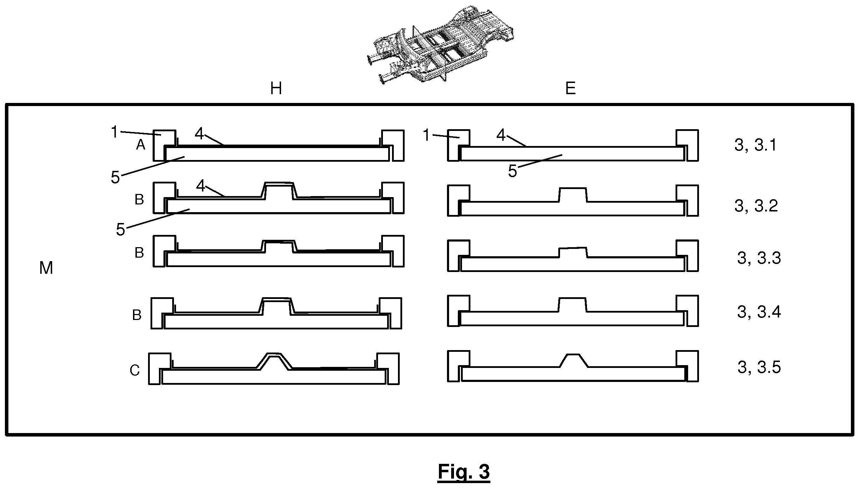

Die antriebsspezifische Bodengruppe, also das Hauptbodenmodul 3, kann in einer Vormontagelinie V aufgebaut werden und an verschiedene Antriebsformen wie Verbrennungsmotor, Elektromotor, Hybridantrieb usw. angepasst sein, wie in den Fig. 2 und 3 dargestellt.

Wie in Fig. 2 dargestellt, in der jeweils in der linken Spalte eine herkömmliche Bauweise H gezeigt ist und in der rechten Spalte eine erfindungsgemäße Bauweise E in der Rohbaufertigung R und in der Montage M, weist der Rohbau bzw. die Plattform 1 in der herkömmlichen Rohbaufertigung R bereits einen Hauptboden 4 auf und werden anschließend in der Montage M Flachspeicher oder sonstige antriebsspezifische Komponenten 5 am Hauptboden 4 befestigt (links). Dabei muss der Hauptboden 4 bereits in der Rohbaufertigung R für verschiedene Antriebsvarianten unterschiedlich ausgebildet sein, beispielsweise in den Hauptbodenvarianten A und B. Erfindungsgemäß wird der Rohbau bzw. die Plattform 1 in der Rohbaufertigung R noch nicht mit einem Hauptboden 4 oder Hauptbodenmodul 3 ausgestattet (rechts) und kann daher unabhängig von der Antriebsvariante vorgehalten werden. Erst in der Montage M wird der Hauptboden 4 zusammen mit den weiteren Komponenten des Hauptbodenmoduls 3 an der Plattform 1, oder einer Karosserie 2 mit ausgebildeter Plattform 1, montiert.

Die gezeigten Hauptbodenmodule 3, Hauptbodenmodul mit Flachspeicher 3.1 und 3.2, Hauptbodenmodul mit Verbrennungsmotorantriebsmodul 3.3, bzw. mit Hybridantriebsmodul 3.4 oder mit Alternativantriebsmodul 3.5, weisen verschiedene Geometrien, insbesondere oben, am Hauptboden 4 auf, der zugleich einen Deckel oder eine Abdeckplatte des jeweiligen Flachspeichers oder Antriebsmoduls bilden kann. Der Hauptboden 4 des Hauptbodenmoduls 3 bildet dabei jeweils auch die - als gestrichelte Linie eingezeichnete - Dichtebene zum Innenraum des Fahrzeuges aus.

Die fertig montierten Einheiten, Plattform 1 mit Hauptboden 4 in unterschiedlichen Varianten A, B und C und mit antriebsspezifischen Komponenten 5 sind in Fig. 3, in der dort oben gezeigten Schnittdarstellung, wieder links in herkömmlicher Bauweise H und rechts in erfindungsgemäßer Bauweise E dargestellt. Die erfindungsgemäßen Einheiten zeichnen sich dadurch aus, dass sie keinen Freiraum bzw. Totraum zwischen Abdeckung des Flachspeichers und Hauptboden 4 aufweisen.

Das Hauptbodenmodul 3 kann auch in zusätzlicher Hinsicht unterschiedlich konfiguriert sein, beispielsweise entweder dessen Hauptboden 4 den Bereich einer Hintersitzanlage umfassen oder nicht umfassen. Die Plattform 1 kann ebenfalls entsprechend zur Aufnahme eines Hauptbodens 4 mit oder ohne Hintersitzanlage vorbereitet sein und daher insbesondere selbst ohne oder mit Hintersitzanlage ausgestattet sein. Vorteilhaft bei inkludiertem Hintersitzanlagenbereich im Hauptboden 4 ist, dass die Sitzgeometrie, das heißt die Sitzhöhe, Abstand vorne zu hinten aller Insassen, Position in Fahrzeuglängsrichtung und Querrichtung, und die Energiespeichergeometrie in einer einzigen Baugruppe, nämlich dem Hauptbodenmodul 3, mit geringen Toleranzen angepasst werden kann.

Standard-Plattformen 1 und (antriebs-)spezifische Hauptböden 4, zum Beispiel einfache Bodenbleche, werden vorzugsweise parallel und separat tauchlackiert. Weiters werden Baugruppen des Karosserieaufbaus 2, wie z.B. Seitenwandmodule 9, Dachmodule 10, Heckabschlussmodule 11 ebenfalls lackiert, jedenfalls decklackiert, bei Metallteilen zuvor bevorzugt auch tauchlackiert.

In der eigentlichen Fahrzeug-Montage M wird das für das jeweilig Fahrzeugmodel passende (antriebs-)spezifische Hauptbodenmodul 3 in Montagerichtung von unten in die Standard-Plattform 1 eingebaut - siehe Fig. 1, Variante V1 -, vorzugsweise befestigt durch Kleben mittels Klebstoff und optional zusätzlich mittels Verschraubungen. Alternativ wäre auch eine Montage des Hauptbodenmoduls 3 von oben in die Plattform 1 möglich.

Als Alternative können die Karosserieaufbau-Baugruppen 9, 10, 11 vor deren Montage auf die Standard-Plattform 1 bereits ausgestattet sein und beispielsweise Innenverkleidung, elektrische Verkabelungen, Teppich, Griffe usw. enthalten. Diese Variante führt für gewöhnlich zu einer noch späteren Variantenbildung des Produktionsprozesses, da der (Karosserie-)Aufbau erst spät in der Fahrzeug-Montage gefügt wird - das heißt die Variantenbildung Kombi, Limousine, Schrägheck usw. wird erst spät im Produktionsprozess gebildet.

In der Variante 2, V2, der Erfindung - siehe Fig. 1, Varianten V2, V2a, V2b - werden in einer Rohbaufertigung R Standard-Karosserien 2 eines Fahrzeugmodells ohne Bodengruppe, also ohne Hauptboden 4, gefertigt. Die Hauptböden 4 werden parallel als antriebsspezifische Baugruppe, nämlich als Hauptbodenmodule 3, in einer Vormontagelinie V hergestellt.

Die Standard-Karosserien 2 und die antriebspezifischen Hauptböden 4 werden in einer Lackierung L tauchlackiert und die Karosserie 2 auch decklackiert.

In einer Vormontagelinie V werden die Hauptböden 4 zu Hauptbodenmodulen 3 ergänzt.

Im "Lackpuffer" P werden die Karosserien 2 in verschiedenen Farben gespeichert.

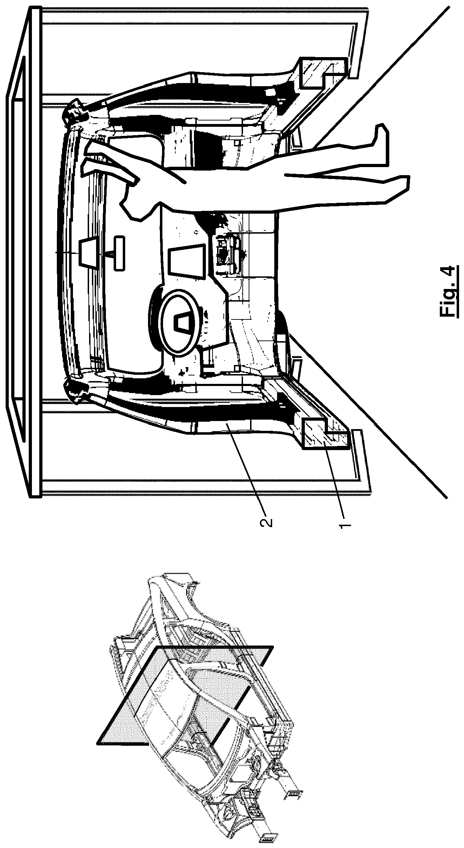

In einer Montagelinie M können an der Karosserie, insbesondere nach dem Tauchlackieren und vor der Befestigung des Hauptbodenmoduls 3 am übrigen Rohbau, Anbauteile montiert werden. Wie in Fig. 4 dargestellt, die einen Schnitt entsprechend der kleinen Abbildung links in Fig. 4 zeigt, kann die Montage vorteilhaft so erfolgen, dass ein Monteur oder ein Montagewerkzeug die Zugänglichkeit zum Fahrzeuginnenraum durch den freien Boden des Rohbaus 1, 2 - da der Hauptboden 4 zusammen mit dem Hauptbodenmodul 3 ja erst nachträglich eingebaut wird - nutzt. Ein Monteur kann daher insbesondere auf einem Montageband stehend im Innenraum des Fahrzeuges arbeiten.

Danach kann die Karosserie 2 in der Montage M mit dem antriebsspezifischen Hauptbodenmodul 3 ausgestattet werden, wobei das Hauptbodenmodul 3 bevorzugt in Montagerichtung von unten gefügt wird.

Durch die Vereinheitlichung der Karosserie 2 kann in der Lagerzone "Lackpuffer" P sehr viel Platz eingespart werden, da nur die verschiedenen Farben vorgehalten werden müssen und nicht alle antriebspezifischen verschiedenen Karosserien jeweils in allen Farben. Es wird dadurch die Möglichkeit geschaffen auf einfache Weise zusätzliche Varianten eines Fahrzeuges herzustellen.

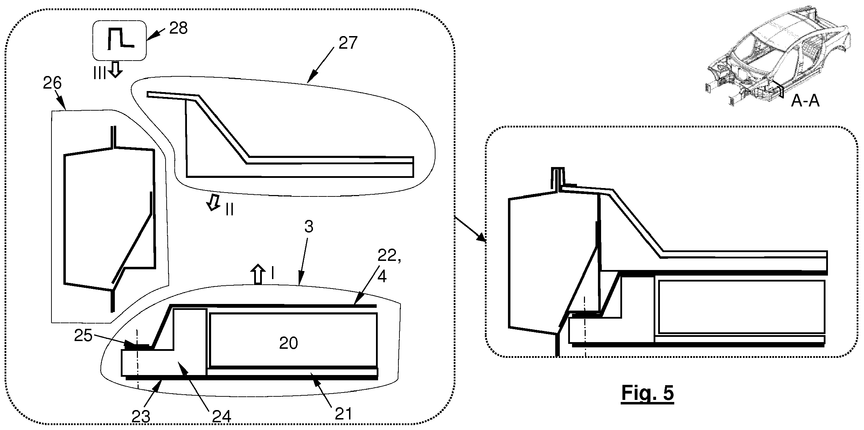

Die Fig. 5 bis Fig. 10 stellen beispielhaft für Hauptbodenmodule 3 mit Flachspeichern - entsprechend Variante 3.2 in Fig. 3 - deren Montage an der Karosserie 2 bzw. der Plattform 1 dar, insbesondere an einem Schweller 26.

Als Verbindungstechnik in der Montagelinie M ist für beide Varianten, V1 und V2, ein Montageklebstoff und/oder eine Verschraubung vorgesehen, die beispielsweise dazu beiträgt, dass die Verklebung für die Aushärtung fixiert wird und die Steifigkeit und Festigkeit der Karosserie erhöht wird.

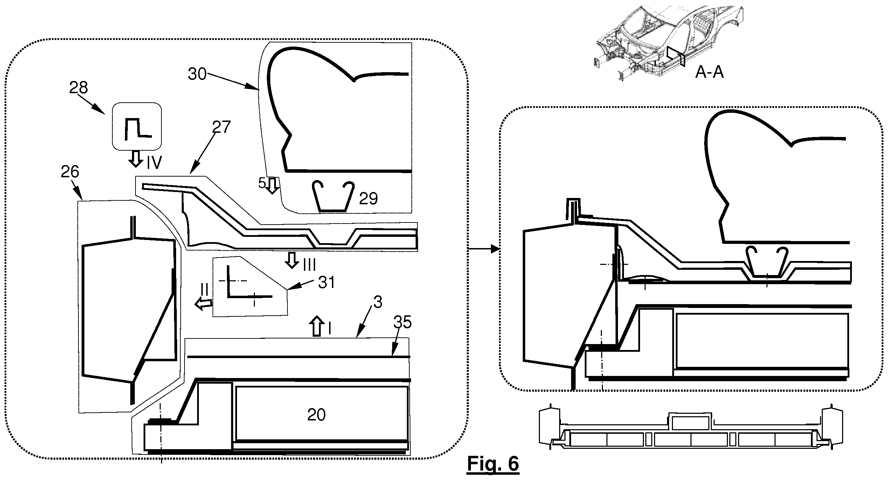

Die Fig. 5 bis 10 zeigen jeweils ausschnittsweise Schnittdarstellungen des Prozesses der Montage von verschiedenen antriebsspezifischen Hauptbodenmodulen 3 (links) und von den fertig montierten Hauptbodenmodulen 3 (rechts) und zwar abwechselnd in einem Bereich außerhalb eines Sitzquerträgers (Fig. 5, 7, 9) und im Bereich eines Sitzquerträgers (Fig. 6, 8, 10). Die Montagerichtung ist jeweils in der Abbildung links durch einen Pfeil dargestellt, und verläuft für das Hauptbodenmodul 3 bevorzugt von unten nach oben. Eine mögliche Montagereihenfolge ist jeweils mit römischen Ziffern angegeben. Der fertig montierte Zustand ist dann jeweils in der Abbildung rechts dargestellt. Die verwendete Schnittebene A-A an der Fahrzeugkarosserie ist jeweils in kleinen Abbildungen eingezeichnet.

So zeigt Fig. 5 die Befestigung eines Hauptbodenmoduls umfassend einen Flachspeicher, nämlich ein Batteriemodul 20 mit einem Batteriemodulträger 21 und einem Batteriedeckel 22 der auch den Hauptboden 4 darstellt, mit einem unteren Batteriedeckel 23 und einem Batterierahmen 24, sowie mit einer Dichtung und / oder Montagekleber und Verschraubung 25. Zusätzlich zum Hauptbodenmodul 3 wird am Rohbau, nämlich einem Seitenschweller 26, ein Interieurbauteil, insbesondere ein Teppich 27 montiert, sowie anschließend eine Türdichtung 28 zur Abdichtung zwischen Seitenschweller 26 und Teppich 27 angebracht.

Fig. 6 zeigt in ähnlicher Weise wie Fig. 5 einen Schnitt der selben Ausführungsform der Fig. 5 oder auch einer erweiterten Ausführungsform im Bereich eines Sitzquerträgers 35. Auf dem Sitzquerträger 35, der ein Bestandteil des Hauptmodulträgers 3 sein kann, können Sitzschienen 29 und Sitze 30 abgestützt werden.

Um Blockstellen und damit Kollisionen beim Fügen zu vermeiden, können diese mit Montagehilfsteilen 32, wie Befestigungswinkeln 31, nach dem Fügen überbrückt werden. Zum Beispiel können Sitzquerträger 35 mit einem Schweller 26 der Plattform 1 mittels Konsolen, insbesondere mittels Befestigungswinkeln 31, verbunden werden, um einen durchgängigen Lastpfad herzustellen.

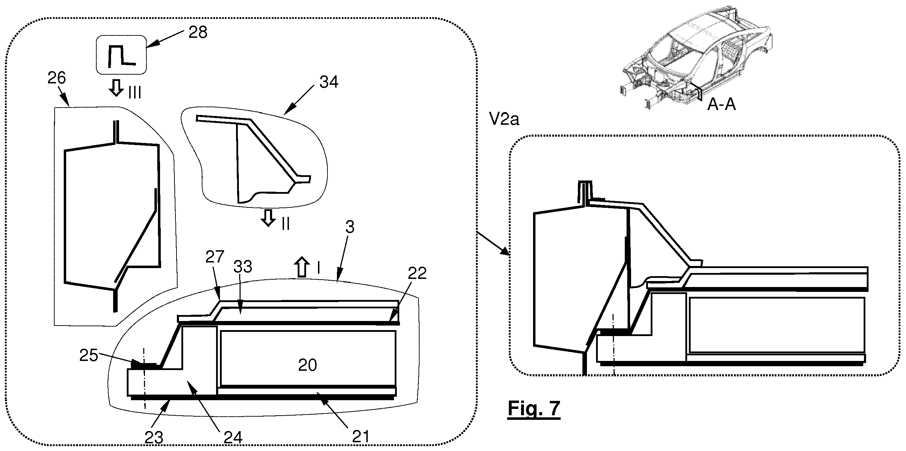

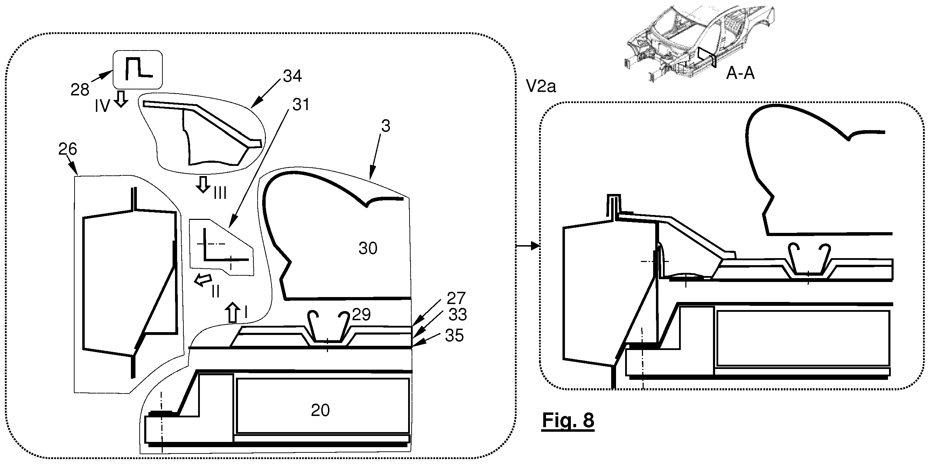

In der Ausführungsform der Fig. 7 und 8 ist das Hauptbodenmodul 3 bereits mit einem partialen, nämlich einem in Längsrichtung mittigen Teppich 27 mit darunterliegendem Isolierschaum 33 ausgestattet - wie auch in der Variante V2a in Fig. 1 dargestellt. Seitlich wird der Teppich 27 durch Randteppichstücke 34 ergänzt. Danach werden Türdichtungen 28 verbaut.

In der Ausführung bzw. dem Schnitt gemäß Fig. 8 weist das Hauptbodenmodul 3 zum Zeitpunkt seiner Befestigung am Schweller 26 zusätzlich bereits einen Sitz oder mehrere Sitze 30 oder Sitzbänke, in Sitzschienen 29, auf.

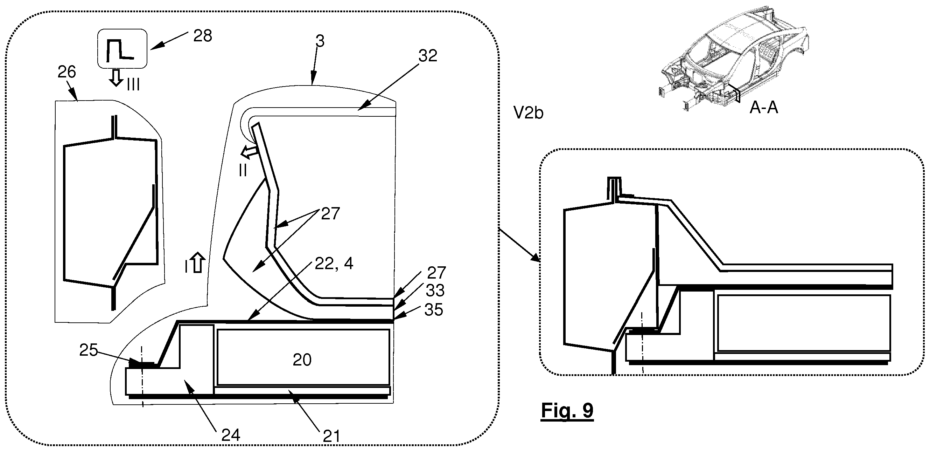

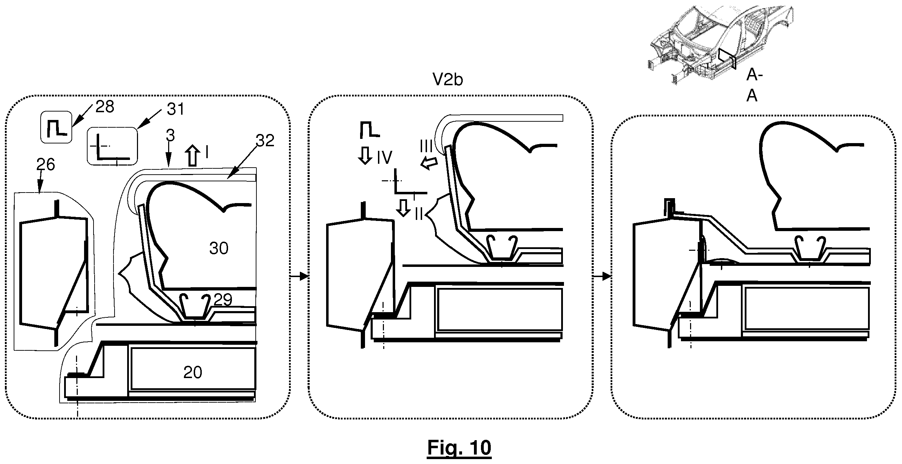

Das Hauptbodenmodul 3 der Ausführungsform der Fig. 9 und 10 weist einen vollständigen, zum Zeitpunkt der Montage des Hauptbodenmoduls 3 mittels Montagehilfsmittel 32 seitlich aufgeklappten Teppich 27 auf, sowie bevorzugt auch einen oder mehrere bereits montierte Autositze 30 - entsprechend der in Fig. 1 dargestellten variante V2b des Hauptbodenmoduls 3. Nach der Befestigung des Hauptbodenmoduls 3 von unten (I) wird der Befestigungswinkel 31 zur Fixierung des Sitzquerträgers montiert (II), der Teppich 27 nach unten geklappt (III) und die Türdichtung 28 aufgesteckt (IV).

Zusammen gefasst können in der Variante V1 Standard-Plattformen 1 und in der variante V2 Standard-Karosserien 2 getrennt tauchlackiert (kathodische Tauchlackierung, KTL) und decklackiert (entsprechend den gewünschten Fahrzeugfarben) werden und vorrätig gehalten werden. (Antriebs-)spezifische Bodengruppen, d.h. Hauptbodenmodule 3 mit Hauptböden 4, die bereits antriebsspezifisch ausgestattet sind, werden vorzugsweise parallel/ separat tauchlackiert und vorrätig gehalten. Da hierdurch (nur) die Standard-Plattform 1 und/oder Standard-Karosserie 2 als Einheits-Karosserie in den verschiedenen Farben gespeichert werden muss und nicht eine Vielzahl von Karosserien-Varianten, wie es im Stand der Technik üblich ist, ergibt sich für dieses Verfahren der Vorteil einer Verkleinerung des Karosserien-Lagerhauses.

In der eigentlichen Fahrzeug-Montage M wird der für das jeweilig Fahrzeugmodel passende spezifische Hauptbodenmodul 3 bevorzugt von unten in die Standard Plattform 1 und/oder Standard Karosserie 2 eingebaut, vorzugsweise mittels Klebstoff und/oder Schrauben.

Diese Lösung kann auch bei einer herkömmlichen Montagelinie zur Anwendung kommen bzw. die bestehende Montagelinie unverändert gelassen werden, da der wesentliche Unterschied und Vorteil bei der Bevorratung von Karosserien bzw. bei der Reduktion der Variantenvielfalt der Karosserien selbst liegt.

### Bezugszeichenliste

- 1: Plattform
- 2: Karosserie
- 3: Hauptbodenmodul
- 3.1: Hauptbodenmodul mit Flachspeicher
- 3.2: Hauptbodenmodul mit Flachspeicher
- 3.3: Hauptbodenmodul mit Verbrennungsmotorantriebsmodul
- 3.4: Hauptbodenmodul mit Hybridantriebsmodul
- 3.5: Hauptbodenmodul mit Alternativantriebsmodul
- 4: Hauptboden
- 5: antriebsspezifische Komponente
- 7: Teppich
- 8: Autositz
- 9: Seitenwandmodul
- 10: Dachmodul
- 11: Heckabschlussmodul
- 20: Batteriemodul
- 21: Batteriemodulträger
- 22: (oberer) Batteriedeckel
- 23: unterer Batteriedeckel
- 24: Batterierahmen
- 25: Dichtung und Verschraubung
- 26: Seitenschweller
- 27: Teppich
- 28: Türdichtung
- 29: Sitzschiene
- 30: Sitz
- 31: Befestigungswinkel
- 32: Montagehilfsteil
- 33: Isolierschaum
- 34: Randteppichstück
- 35: Sitzquerträger

- A-A: Schnittebene
- A, B, C: Varianten Hauptboden
- E: Erfindungsgemäße Bauweise
- H: Herkömmliche Bauweise
- L: Lackierung
- M: Montage
- P: Lackpuffer
- R: Rohbaufertigung
- V1: Variante 1
- V2: Variante 2

## Patentansprüche

1. Verfahren zur Herstellung eines Kraftfahrzeuges, wobei das Kraftfahrzeug als Rohbau eine Plattform (1) aus Metall umfasst und eine Karosserie (2) aus Metall, die auf die Plattform (1) aufgesetzt ist,
**dadurch gekennzeichnet, dass** ein Hauptbodenmodul (3), umfassend einen Hauptboden (4) des Rohbaus und zumindest eine antriebsspezifische Komponente (5), getrennt vom übrigen Rohbau (1, 2), also getrennt von der Plattform (1) und getrennt von der Karosserie (2), hergestellt wird und danach an der bereits tauchlackierten Plattform (1) und/oder an der bereits tauchlackierten Karosserie (2) befestigt wird.

2. Verfahren nach Anspruch 1,
**dadurch gekennzeichnet, dass** das Hauptbodenmodul (3) in einer Montagelinie an der bereits tauchlackierten Plattform (1) und/oder an der bereits tauchlackierten Karosserie (2) befestigt wird.

3. Verfahren nach zumindest einem der vorhergehenden Ansprüche,
**dadurch gekennzeichnet, dass** an der Karosserie (2) nach dem Tauchlackieren und vor der Befestigung des Hauptbodenmoduls (3) am übrigen Rohbau (1, 2) Anbauteile montiert werden, nämlich so, dass ein Monteur oder ein Montagewerkzeug die Zugänglichkeit zum Fahrzeuginnenraum durch den freien Boden des Rohbaus (1, 2) nutzen.

4. Verfahren nach zumindest einem der vorhergehenden Ansprüche,
**dadurch gekennzeichnet, dass** die zumindest eine antriebsspezifische Komponente (5) ein Flachspeicher ist oder eine Antriebswelle für einen Verbrennungsmotorantrieb, Elektroantrieb, Hybridantrieb oder Alternativantrieb.

5. Verfahren nach Anspruch 4,
**dadurch gekennzeichnet, dass** die Abdeckung des Flachspeichers zugleich den Hauptboden (4) des Rohbaus (1, 2) bildet, so dass zumindest abschnittsweise kein Freiraum zwischen Abdeckung und Hauptboden (4) besteht.

6. Verfahren nach zumindest einem der vorhergehenden Ansprüche,
**dadurch gekennzeichnet, dass** das Hauptbodenmodul (3), zum Zeitpunkt der Befestigung des Hauptbodenmoduls (3) am übrigen Rohbau (1, 2), an der Oberseite des Hauptbodens (4) zumindest einen montierten Autositz (8) umfasst.

7. Verfahren nach zumindest einem der vorhergehenden Ansprüche,
**dadurch gekennzeichnet, dass** das Hauptbodenmodul (3) nach dem Tauchlackieren und vor der Befestigung des Hauptbodenmoduls (3) am übrigen Rohbau (1, 2) gelagert wird.

8. Verfahren nach zumindest einem der vorhergehenden Ansprüche,
**dadurch gekennzeichnet, dass** das Hauptbodenmodul (3) an der Plattform (1) in Montagerichtung von unten oder von oben befestigt wird.

9. Verfahren nach Anspruch 8,
**dadurch gekennzeichnet, dass**, nach der Befestigung des Hauptbodenmoduls (3) an der Plattform (1), Karosseriemodule (9, 10, 11) zur Bildung der Karosserie (2) an der Plattform (1) befestigt werden.

10. Verfahren nach Anspruch 9,
**dadurch gekennzeichnet, dass** die Karosserienmodule (9, 10, 11) zum Zeitpunkt der Befestigung an der Plattform (1) bereits ausgestattet sind.

11. Verfahren nach Anspruch 8,
**dadurch gekennzeichnet, dass** das Hauptbodenmodul (3) an einer Karosserie (2) mit bereits befestigter Plattform (1) in Montagerichtung von unten befestigt wird.

12. Verfahren zur Herstellung einer Gruppe von Kraftfahrzeugen, umfassend zumindest ein erstes Kraftfahrzeug und ein zweites Kraftfahrzeug, wobei das erste und das zweite Kraftfahrzeug nach einem der vorhergehenden Ansprüche hergestellt werden, wobei gleiche Hauptbodenmodule (3) an unterschiedlichen Plattformen (1) oder an unterschiedlichen Karosserien (2) des ersten und zweiten Kraftfahrzeuges befestigt werden.

13. Verfahren zur Herstellung einer Gruppe von Kraftfahrzeugen, umfassend zumindest ein erstes Kraftfahrzeug und ein zweites Kraftfahrzeug, wobei das erste und das zweite Kraftfahrzeug nach einem der vorhergehenden Ansprüche hergestellt werden, wobei unterschiedliche Hauptbodenmodule (3) an gleichen Plattformen (1) oder an gleichen Karosserien (2) des ersten und zweiten Kraftfahrzeuges befestigt werden.

## Claims

1. Method for producing a motor vehicle, wherein the motor vehicle as a body shell comprises a platform (1) made of metal and a body (2) made of metal which is fitted on the platform (1),
**characterized in that** a main floor module (3), comprising a main floor (4) of the body shell and at least one drive-specific component (5), is produced separately from the rest of the body shell (1, 2), i.e. separately from the platform (1) and separately from the body (2), and is then fastened to the already dip coated platform (1) and/or to the already dip coated body (2).

2. Method according to Claim 1,
**characterized in that** the main floor module (3) is fastened to the already dip coated platform (1) and/or to the already dip coated body (2) in an assembly line.

3. Method according to at least one of the preceding claims,
**characterized in that** attachment parts are assembled on the body (2) after the dip coating and before the fastening of the main floor module (3) to the rest of the body shell (1, 2), namely such that an assembly fitter or an assembly tool can utilize the accessibility to the vehicle interior through the open floor of the body shell (1, 2).

4. Method according to at least one of the preceding claims,
**characterized in that** the at least one drive-specific component (5) is a shallow storage device or a drive shaft for a combustion engine drive, an electric drive, a hybrid drive or an alternative drive.

5. Method according to Claim 4,
**characterized in that** the cover of the shallow storage device at the same time forms the main floor (4) of the body shell (1, 2) so that there is no clearance between the cover and the main floor (4), at least in sections.

6. Method according to at least one of the preceding claims,
**characterized in that** at the time of fastening the main floor module (3) to the rest of the body shell (1, 2), the main floor module (3) comprises on the upper side of the main floor (4) at least one assembled car seat (8).

7. Method according to at least one of the preceding claims,
**characterized in that** the main floor module (3) is stored after the dip coating and before the fastening of the main floor module (3) to the rest of the body shell (1, 2) .

8. Method according to at least one of the preceding claims,
**characterized in that** the main floor module (3) is fastened to the platform (1) in the assembly direction from below or from above.

9. Method according to Claim 8,
**characterized in that**, after the fastening of the main floor module (3) to the platform (1), body modules (9, 10, 11) for forming the body (2) are fastened to the platform (1).

10. Method according to Claim 9,
**characterized in that** the body modules (9, 10, 11) are already equipped at the time of fastening to the platform (1) .

11. Method according to Claim 8,
**characterized in that** the main floor module (3) is fastened to a body (2) having an already fastened platform (1) in the assembly direction from below.

12. Method for producing a group of motor vehicles, comprising at least a first motor vehicle and a second motor vehicle, wherein the first and the second motor vehicle are produced according to one of the preceding claims, wherein identical main floor modules (3) are fastened to different platforms (1) or to different bodies (2) of the first and second motor vehicle.

13. Method for producing a group of motor vehicles, comprising at least a first motor vehicle and a second motor vehicle, wherein the first and the second motor vehicle are produced +
according to one of the preceding claims, wherein different main floor modules (3) are fastened to identical platforms (1) or to identical bodies (2) of the first and second motor vehicle.

## Revendications

1. Procédé de fabrication d'un véhicule automobile, le véhicule automobile comportant, en tant que caisse brute, une plate-forme (1) en métal et une carrosserie (2) en métal qui est placée sur la plate-forme (1), **caractérisé en ce qu'**un module de fond principal (3), comportant un fond principal (4) de la caisse brute et au moins un composant (5) spécifique à l'entraînement, est fabriqué séparément du reste de la caisse brute (1, 2), c'est-à-dire séparément de la plate-forme (1) et séparément de la carrosserie (2), et est fixé ensuite à la plate-forme (1) déjà peinte par immersion et/ou à la carrosserie (2) déjà peinte par immersion.

2. Procédé selon la revendication 1,
**caractérisé en ce que** le module de fond principal (3) est fixé, dans une chaîne de montage, à la plate-forme (1) déjà peinte par immersion et/ou à la carrosserie (2) déjà peinte par immersion.

3. Procédé selon au moins l'une des revendications précédentes,
**caractérisé en ce que** des pièces rapportées sont montées sur la carrosserie (2) après la peinture par immersion et avant la fixation du module de fond principal (3) au reste de la caisse brute (1, 2), à savoir de telle sorte qu'un monteur ou un outil de montage utilise l'accessibilité à l'espace intérieur de véhicule à travers le fond libre de la caisse brute (1, 2).

4. Procédé selon au moins l'une des revendications précédentes,
**caractérisé en ce que** ledit au moins un composant (5) spécifique à l'entraînement est un accumulateur plat ou un arbre d'entraînement pour un entraînement de moteur à combustion, un entraînement électrique, un entraînement hybride ou un entraînement alternatif.

5. Procédé selon la revendication 4,
**caractérisé en ce que** le recouvrement de l'accumulateur plat forme en même temps le fond principal (4) de la caisse brute (1, 2), de telle sorte qu'aucun espace libre ne soit présent entre le recouvrement et le fond principal (4) au moins dans certaines régions.

6. Procédé selon au moins l'une des revendications précédentes,
**caractérisé en ce que** le module de fond principal (3) comporte, au moment de la fixation du module de fond principal (3) au reste de la caisse brute (1, 2), au moins un siège de véhicule (8) monté sur le côté supérieur du fond principal (4).

7. Procédé selon au moins l'une des revendications précédentes,
**caractérisé en ce que** le module de fond principal (3) est monté après la peinture par immersion et avant la fixation du module de fond principal (3) au reste de la caisse brute (1, 2).

8. Procédé selon au moins l'une des revendications précédentes,
**caractérisé en ce que** le module de fond principal (3) est fixé à la plate-forme (1) par le bas ou par le haut dans le sens de montage.

9. Procédé selon la revendication 8,
**caractérisé en ce qu'**après la fixation du module de fond principal (3) à la plate-forme (1), des modules de carrosserie (9, 10, 11) sont fixés à la plate-forme (1) pour la formation de la carrosserie (2).

10. Procédé selon la revendication 9,
**caractérisé en ce que** les modules de carrosserie (9, 10, 11) sont déjà équipés au moment de la fixation à la plate-forme (1).

11. Procédé selon la revendication 8,
**caractérisé en ce que** le module de fond principal (3) est fixé, par le bas dans le sens de montage, à une carrosserie (2) dotée de la plate-forme (1) déjà fixée.

12. Procédé de fabrication d'un groupe de véhicules automobiles, comportant au moins un premier véhicule automobile et un deuxième véhicule automobile, dans lequel le premier et le deuxième véhicule automobile sont fabriqués selon l'une des revendications précédentes, dans lequel des modules de fond principaux (3) identiques sont fixés à différentes plates-formes (1) ou à différentes carrosseries (2) du premier et du deuxième véhicule automobile.

13. Procédé de fabrication d'un groupe de véhicules automobiles, comportant au moins un premier véhicule automobile et un deuxième véhicule automobile, dans lequel le premier et le deuxième véhicule automobile sont fabriqués selon l'une des revendications précédentes, dans lequel des modules de fond principaux (3) différents sont fixés à des plates-formes (1) identiques ou à des carrosseries (2) identiques du premier et du deuxième véhicule automobile.
